# EUROPEAN PATENT SPECIFICATION

(11) **EP 3 629 736 B1**
(45) Date of publication and mention of the grant of the patent: **22.11.2023**
(21) Application number: 18729317.0
(22) Date of filing: 22.05.2018
(51) Int. Cl.: A01N 37/16, A01N 43/46, A01N 59/00, A01N 25/02, A01N 25/22, A01P 1/00

(54) **LIQUID ACETYL RADICALS GENERATOR COMPOSITION**
FLÜSSIGE GENERATORZUSAMMENSETZUNG FÜR ACETYLRADIKALE
COMPOSITION DE GÉNÉRATEUR DE RADICAUX ACÉTYLE LIQUIDES

(30) Priority: 22.05.2017 FR 1754507
(43) Date of publication of application: 08.04.2020
(60) Divisional application: 23203617.8
(73) Proprietor: Ecolab USA Inc., St. Paul, MN 55012 (US)
(72) Inventor: BERTHO, Jean Noel, Saint Paul, Minnesota 55102 (US); TERRIER, Sébastien, Saint Paul, Minnesota 55201 (US); RAUWEL, Gaétan, Saint Paul, Minnesota 55102 (US)
(74) Representative: Plasseraud IP
(86) International application number: PCT/US2018/033856
(87) International publication number: WO 2018/217723

(56) References cited:
- EP-A1- 0 953 283
- EP-A2- 1 371 643
- WO-A1-00/53011

## Description

The present invention relates to a new acetyl radicals generator composition particularly intended for preparing peracetic acid-based disinfectant compositions.

In a hospital environment, some surgical and medical instruments or equipment such as, for example, surgical instruments or endoscopy equipment, require high-level disinfection. This disinfection is often carried out using soaking baths, in which the instruments and equipment are immersed.

A particularly effective solution for such an application is marketed by the Applicant under the name Anioxyde 1000 and is disclosed in patent application WO 00/53011 A1. This product is composed of two distinct liquid compositions: an oxygen generator liquid base comprising hydrogen peroxide, on the one hand, and a liquid acetyl radicals generator comprising N-acetylcaprolactam solubilized in isopropanol, on the other hand. When the two liquids are mixed, the hydrogen peroxide reacts with the N-acetylcaprolactam in a perhydrolysis reaction and thus generates peracetic acid.

In addition to allowing fast and effective extemporaneous preparation of peracetic acid, this system allows full disinfection in five minutes. However, Anioxyde^{®} 1000 has a major disadvantage. N-acetylcaprolactam is not in fact stable during the time in solution. The lifetime of the acetyl radicals generator is thus only 12 months.

EP1371643A2 disclosed a method of preparing in situ organic peroxyacids stable with time in a hydroalcoholic solution, particularly indicated to be used in the health-care field (i.e. in hospitals, private clinics, dental surgeries, etc.) for carrying out cold-sterilisation of medical-surgical devices, particularly the optical-fiber devices used for therapeutical and diagnostic applications.

Therefore, a requirement exists for a liquid acetyl radicals generator composition for preparing a liquid peracetic acid-based disinfectant composition with a better lifetime compared to the prior art.

The Applicant is to be credited with having found, as a result of extensive research, the source of these stability problems. Indeed, it is particularly the isopropanol that is used as solvent that has a negative effect on the stability of the N-acetylcaprolactam.

Therefore, the invention firstly relates to a liquid acetyl radicals generator composition comprising N-acetylcaprolactam and an organic solvent, characterized in that the organic solvent is selected from propylene glycol ethers and that the solvent content is from 20 % to 60 % by weight relative to the total weight of the composition, and characterized in that the composition is free of aliphatic alcohol.

Surprisingly, the use of a propylene glycol ether instead of isopropanol allows the shelf life of the liquid acetyl radicals generator composition to be significantly increased. Thus, the composition according to the invention is preferably isopropanol free. The term "propylene glycol ether" within the scope of the invention comprises monopropyl glycol ethers, dipropylene glycol ethers, tripropylene glycol ethers and their mixtures. Preferably, the organic solvent is selected from C1 to C4 linear or branched alkyl or alkoxy propylene glycol ethers, C1 to C4 linear or branched alkyl or alkoxy dipropylene glycol ethers, C1 to C4 linear or branched alkyl or alkoxy tripropylene glycol ethers and their mixtures, more preferably from dipropylene glycol monomethyl ether, monopropylene glycol mono-*n*-butyl ether (butoxypropanol), dipropylene glycol mono-n-butyl ether, tripropylene glycol monomethyl ether and their mixtures. A particularly significant increase in the shelf life has been obtained with tripropylene glycol monomethyl ether.

The N-acetylcaprolactam content of the acetyl radicals generator composition is advantageously from 30 % to 80 %, preferably from 40 % to 70 %, more preferably from 50 % to 65 % and more preferably approximately 60 % relative to the total weight of the composition.

The organic solvent content of the acetyl radicals generator composition is from 20 % to 60 %, preferably from 20 % to 50 %, more preferably from 25 % to 40 % and more preferably from 30 % to 35 % relative to the total weight of the composition.

The liquid acetyl radicals generator composition according to the invention can further comprise one or more surfactants. The one or more surfactants can be selected from non-ionic, anionic, amphoteric or cationic surfactants, with non-ionic surfactants being preferred. The one or more non-ionic surfactants particularly can be selected from alkoxylated and alkylpolyglucoside non-ionic surfactants. The alkoxylated non-ionic surfactants are advantageously selected from alkoxylated fatty alcohols, preferably ethoxylated and/or propoxylated, particularly polyalkoxylated fatty alcohols in which the polyalkoxylated part is composed of an OE-OP (ethylene oxide-proplyene oxide) copolymer block, and their mixtures. Commercial examples of such surfactants are those from the Genapol^{®} EP range marketed by Clariant (Muttenz, Switzerland), such as, for example, Genapol^{®} EP 2584 (mixture of C₁₂C₁₅ polyalkoxylated alcohols (8OE, SOP). With N-acetylcaprolactam being sensitive to hydrolysis, the surfactant advantageously is a surfactant with 100 % active material, i.e. water free.

The non-ionic surfactant content in the acetyl radicals generator composition according to the invention advantageously is from 1 % to 10 %, preferably from 2 % to 7 %, more preferably approximately 5 % by weight relative to the total weight of the composition.

The acetyl radicals generator composition according to the invention can further comprise an anti-corrosion agent such as benzotriazole, for example. However, the inventors have observed that benzotriazole had a negative influence on the stability of the composition according to the invention. It is for this reason that it is preferably benzotriazole free.

The acetyl radicals generator composition according to the invention can further comprise one or more coloring agents or color indicators.

The acetyl radicals generator composition according to the invention is particularly useful in combination with a liquid perhydroxyl ions generator composition. Therefore, the invention also relates to a kit for preparing a disinfectant composition containing peracetic acid, the kit comprising:
- in a first container, a liquid acetyl radicals generator composition as defined above; and
- in a second container, a liquid perhydroxyl ions generator composition comprising hydrogen peroxide.

The liquid perhydroxyl ions generator composition advantageously contains from 1 % to 7 %, preferably from 2 % to 5 %, more preferably from 2.5 % to 3.5 % and even more preferably approximately 3 % by weight relative to the total weight of the composition.

The liquid perhydroxyl ions generator composition advantageously is an aqueous solution of hydrogen peroxide.

The liquid perhydroxyl ions generator composition can further comprise stabilizing agents, particularly pH regulators, for stabilizing it over time while avoiding the decomposition of the hydrogen peroxide during storage. These stabilizing agents can be selected, for example, from mineral and organic bases such as, for example, alkali hydroxides, such as potassium or sodium hydroxide, and alkanolamines, such as monoethanolamine, diethanolamine and triethanolamine.

The liquid perhydroxyl ions generator composition can further comprise anti-corrosion agents. Suitable anti-corrosion agents particularly comprise phosphates, phosphonates, phosphoric esters and triazole derivatives such as benzotriazole.

The perhydroxyl ions generator composition can further comprise one or more additive(s), such as stabilizing agents like, for example, anti-oxidant agents or anti-UV agents. It can also comprise a coloring agent or colored indicator. This is of particular interest in the event that the acetyl radicals generator composition according to the invention does not contain coloring or color indicator.

When the acetyl radicals generator composition according to the invention is mixed with a perhydroxyl ions generator composition as described above, the N-acetylcaprolactam reacts with the hydrogen peroxide in a perhydrolysis reaction and thus generates peracetic acid. Therefore, the invention further relates to a method for preparing a disinfectant composition containing peracetic acid, in which:
- a liquid acetyl radicals generator composition is provided as defined above, particularly contained in a first container;
- a liquid perhydroxyl ions generator composition is provided as defined above, particularly contained in a second container; and
- the acetyl radicals generator composition and the perhydroxyl ions generator composition are mixed.

The disinfectant composition that is thus obtained is particularly useful for disinfecting, particularly by soaking, surgical and medical instruments and equipment. Therefore, the invention also relates to the use of the kit for preparing a disinfectant composition obtained according to the invention and to the disinfectant composition according to the method of the invention for disinfecting, particularly by soaking, surgical and medical instruments and equipment. The term "surgical and/or medical instruments and equipment" as used in the present application is to be broadly understood to be referring to the medical devices and all the other articles that are used in the medical, dental, pharmaceutical and veterinary fields that require cleaning with aqueous detergents prior to reuse. It particularly comprises surgical instruments, endoscopic equipment and echography probes, for example, transoesophageal probes.

The invention now will be described using non-limiting embodiments of the invention.

### EXAMPLES

List of abbreviations:
- ACL: N-acetylcaprolactam;
- DPM: dipropylene glycol monomethyl ether (Arcosolv^{®} DPM);
- DPnB: dipropylene glycol mono-n-butyl ether (Arcosolv^{®} DPnB);
- PnB: monopropylene glycol mono-n-butyl ether (Arcosolv^{®} PnB);
- TPM: tripropylene glycol monomethyl ether (Dowanol^{®} TPM);
- PM1: 1-methoxy-2-propanol (methoxypropanol).

### EXAMPLE 1: influence of the organic solvent on the stability of the N-acetylcaprolactam

Four liquid acetyl radicals generator compositions according to the invention composed of N-acetylcaprolactam and a propylene glycol ether (I1 - I5) were prepared and compared to an acetyl radicals generator composition according to WO 00/53011 A1 composed of N-acetylcaprolactam and of isopropanol (EC). The formulae of various compositions are provided in table 1 below.

**Table 1**

| **Composition (% by weight/total weight)** | **I1** | **I2** | **I3** | **I4** | **I5** | **EC1** |
|---|---|---|---|---|---|---|
| N-actylcaprolactam | 60 | 60 | 60 | 60 | 60 | 60 |
| Isopropanol | | | | | | 40 |
| DPM | 40 | | | | | |
| PM1 | | 40 | | | | |
| DPnB | | | 40 | | | |
| PnB | | | | 40 | | |
| TPM | | | | | 40 | |

The stability of the N-acetylcaprolactam in the various compositions was assessed using an accelerated ageing test at 50 °C. Sample preservation conditions: 250 ml glass bottle, Bakelite plug placed in an oven set to a temperature of 50 °C without controlled hygrometry.

The test results are summarized in table 2 below.

**Table 2**

| | | **ACL content (% by weight relative to the total weight)** | | | | |
|---|---|---|---|---|---|---|
| | **I1** | **I2** | **I3** | **I4** | **I5** | **EC** |
| **T0 days 50°C** | 60 | 60 | 60 | 60 | 60 | 60 |
| **T7 days 50°C** | 59.76 | 59.91 | 60.29 | 60.09 | 60.99 | 56.49 |

These results clearly show that the use of a propylene glycol ether allows the stability of the acetyl radicals generator composition to be increased compared to a composition according to WO 00/53011 A1 (EC).

### EXAMPLE 2: stability of various liquid acetyl radicals generator compositions

Eight liquid acetyl radicals generator compositions (16 - 113) according to the invention were prepared and their stability assessed and compared to a composition with isopropanol (EC). Their compositions are provided in table 3.

**Table 3**

| **Composition (% by weight/total weight)** | **EC2** | **I6** | **I7** | **I8** | **I9** | **I10** | **I11** |
|---|---|---|---|---|---|---|---|
| Isopropanol | 30.3 | | | | | | |
| Benzotriazole | 3.7 | 3.7 | | 3.7 | | 3.7 | |
| Genapol EP 2584 | | | | | | | |
| Coloring agent | | | | | | | |
| N-acetylcaprolactam | 60 | 60 | 60 | 60 | 60 | 60 | 60 |
| DPM | | | | | | 30.3 | 34 |
| DPnB | | 30.3 | 34 | | | | |
| PnB | | | | | | | |
| TPM | | | | | | | |
| PM1 | | | | 30.3 | 34 | | |

| **Composition (% by weight/total weight)** | **I12** | **I13** | **I14** | **I15** | | | |
|---|---|---|---|---|---|---|---|
| Isopropanol | | | | | | | |
| Benzotriazole | 3.7 | | 3.7 | | | | |
| Genapol EP 2584 | | | | | | | |

| Coloring agent | | | | | | | |
|---|---|---|---|---|---|---|---|
| N-acetylcaprolactam | | 60 | | 60 | | 60 | 60 |
| DPM | | | | | | | |
| DPnB | | | | | | | |
| PnB | | 30.3 | | 34 | | | |
| TPM | | | | | | 30.3 | 34 |
| PM1 | | | | | | | |

The stability of the N-acetylcaprolactam in the various compositions was assessed using the accelerated ageing test at 50 °C described in example 1. The test results are summarized in table 4 below.

**Table 4**

| | **ACL content** (% **by weight relative to the total weight)** | | | | | | | | |
|---|---|---|---|---|---|---|---|---|---|
| | **EC2** | **16** | | **17** | **18** | **19** | | **110** | **111** |
| **T0 days 50°C** | 60 | 60 | | 60 | 60 | 60 | | 60 | 60 |
| **T7 days 50°C** | 50.1 | 53.8 | | 59.4 | 54.91 | 59.06 | | 53.25 | 59.55 |
| **T15 days 50°C** | 44.9 | 49.7 | | 58.3 | 51.71 | 58.53 | | 49.23 | 58.20 |

| | **ACL content (% by weight relative to the total weight)** | | | | | | | | |
|---|---|---|---|---|---|---|---|---|---|
| | **112** | | **113** | | **114** | | **115** | | |
| **T0 days 50°C** | 60 | | 60 | | 60 | | 60 | | |
| **T7 days 50°C** | 53.29 | | 59.79 | | 53.37 | | 60.18 | | |
| **T15 days 50°C** | 50.34 | | 59.00 | | 51.48 | | 59.92 | | |

These results show that all the compositions according to the invention have improved stability over time compared to the sample containing isopropanol (EC2) and thus an acceptable shelf life (lifetime). When the composition does not contain benzotriazole, its stability is further improved. The best result is obtained for the composition with TPM.

### EXAMPLE 3: assessment of the microbiological activity of a disinfectant composition prepared with an acetyl radicals generator composition according to the invention

A disinfectant composition was prepared by mixing 100 g of a hydroxyl radicals generator composition comprising (3.0 % hydrogen peroxide, 0.05 % sodium perborate tetrahydrate and 0.0075 % Dequest 2066 (Italmatch Chemicals), with the percentages being expressed by weight relative to the total weight of the hydroxyl radicals generator composition), with 0.82 g of the composition 115 being assessed for its microbiological performance against various strains in clean conditions according to the standards listed in table 5, with a contact time of 5 minutes. For comparison purposes, the same tests were performed with Anioxyde^{®} 1000 solution prepared according to the instructions.

**Table 5**

| | | | **Microbial reduction** | |
|---|---|---|---|---|
| **Standard** | **Strain** | **Invention** | | **Anioxyde^{®} 1000** |
| EN 13727+A2 (December 2015) | Pseudomonas aeruginosa | | > 5 Log | > 5 Log |
| | Staphylococcus aureu | | > 5 Log | > 5 Log |
| | Enterococcus hirae | | > 5 Log | > 5 Log |
| EN 14348 (June 2015) | Mycobacterium terrae | | > 4 Log | > 4 Log |
| | Mycobacterium avium | | > 4 Log | > 4 Log |
| EN 13624 (November 2013) | Candida albicans | | > 4 Log | > 4 Log |
| | Aspergillus niger | | > 4 Log | > 4 Log |
| EN 13704 (April 2002) 5Log | B. subtilis | | > 5 Log | > 5 Log |
| | B. cereus | | > 5 Log | > 5 Log |
| EN 14476 + A1 (October 2015) 4Log | Poliovirus | | > 4 Log | > 4 Log |
| | Adenovirus | | > 4 Log | > 4 Log |
| | Norovirus | | > 4 Log | > 4 Log |

These results show that a disinfectant composition prepared on the basis of an acetyl radicals generator composition according to the invention allows a full disinfection spectrum to be obtained in 5 minutes. This performance is the same level as that obtained for the reference product, Anioxyde^{®} 1000.

## Claims

1. Liquid acetyl radicals generator composition comprising N-acetylcaprolactam and an organic solvent, **characterized in that** the organic solvent is selected from propylene glycol ethers and that the solvent content is from 20 % to 60 % by weight relative to the total weight of the composition, and **characterized in that** the composition is free of aliphatic alcohol.

2. Composition according to claim 1, **characterized in that** the organic solvent is selected from dipropylene glycol monomethyl ether, monopropylene glycol mono-*n*-butyl ether (butoxypropanol), dipropylene glycol mono-*n*-butyl ether, tripropylene glycol monomethyl ether and their mixtures.

3. Composition according to claim 2, **characterized in that** the organic solvent is tripropylene glycol monomethyl ether.

4. Composition according to any of the preceding claims, **characterized in that** the N-acetylcaprolactam content is from 30 % to 80 % by weight relative to the total weight of the composition.

5. Composition according to any of the preceding claims, **characterized in that** it further comprises a non-ionic surfactant.

6. Composition according to any of the preceding claims, **characterized in that** it is benzotriazole free.

7. Kit for preparing a disinfectant composition containing peracetic acid, the kit containing:
- in a first container, a liquid acetyl radicals generator composition according to any of the preceding claims; and
- in a second container, a liquid perhydroxyl ions generator composition comprising hydrogen peroxide.

8. Method for preparing a disinfectant composition containing peracetic acid, wherein:
- an acetyl radicals generator composition is provided according to any of claims 1 to 6;
- a perhydroxyl ions generator composition is provided comprising hydrogen peroxide;
- the acetyl radicals generator composition and the perhydroxyl ions generator composition are mixed.

9. Non-therapeutic use of a kit according to claim 7 for disinfecting.

10. Non-therapeutic use according to claim 9 of a kit according to claim 7 for disinfecting surgical and/or medical instruments and equipment.

11. Non-therapeutic use of a disinfectant composition prepared according to the method of claim 8 for disinfecting.

12. Non-therapeutic use according to claim 11 of a disinfectant composition prepared according to the method of claim 8 for disinfecting surgical and/or medical instruments and equipment.

## Patentansprüche

1. Flüssige Acetylradikale-Generatorzusammensetzung, umfassend N-Acetylcaprolactam und ein organisches Lösungsmittel, **dadurch gekennzeichnet, dass** das organische Lösungsmittel ausgewählt ist aus Propylenglykolethern und dass der Lösungsmittelgehalt von 20 Gew.-% bis 60 Gew.-%, bezogen auf das Gesamtgewicht der Zusammensetzung, beträgt, und **dadurch gekennzeichnet, dass** die Zusammensetzung frei von aliphatischem Alkohol ist.

2. Zusammensetzung nach Anspruch 1, **dadurch gekennzeichnet, dass** das organische Lösungsmittel ausgewählt ist aus Dipropylenglykolmonomethylether, Monopropylenglykolmono-n-butylether (Butoxypropanol), Dipropylenglykolmono-n-butylether, Tripropylenglykolmonomethylether und deren Mischungen.

3. Zusammensetzung nach Anspruch 2, **dadurch gekennzeichnet, dass** das organische Lösungsmittel Tripropylenglykolmonomethylether ist.

4. Zusammensetzung nach einem der vorhergehenden Ansprüche, **dadurch gekennzeichnet, dass** der Gehalt an N-Acetylcaprolactam von 30 Gew.-% bis 80 Gew.-%, bezogen auf das Gesamtgewicht der Zusammensetzung, beträgt.

5. Zusammensetzung nach einem der vorhergehenden Ansprüche, **dadurch gekennzeichnet, dass** sie ferner ein nichtionisches Tensid umfasst.

6. Zusammensetzung nach einem der vorhergehenden Ansprüche, **dadurch gekennzeichnet, dass** sie frei von Benzotriazol ist.

7. Kit zur Herstellung einer Desinfektionsmittelzusammensetzung, die Peressigsäure enthält, das Kit enthaltend:
- in einem ersten Behälter, eine flüssige Acetylradikale-Generatorzusammensetzung nach einem der vorhergehenden Ansprüche; und
- in einem zweiten Behälter, eine flüssige Perhydroxylionen-Generatorzusammensetzung, umfassend Wasserstoffperoxid.

8. Verfahren zur Herstellung einer Desinfektionsmittelzusammensetzung, die Peressigsäure enthält, wobei:
- eine Acetylradikale-Generatorzusammensetzung nach einem der Ansprüche 1 bis 6 bereitgestellt wird;
- eine Perhydroxylionen-Generatorzusammensetzung, umfassend Wasserstoffperoxid, bereitgestellt wird;
- die Acetylradikale-Generatorzusammensetzung und die Perhydroxylionen-Generatorzusammensetzung gemischt werden.

9. Nicht-therapeutische Verwendung eines Kits nach Anspruch 7 zur Desinfektion.

10. Nicht-therapeutische Verwendung nach Anspruch 9 eines Kits nach Anspruch 7 zur Desinfektion von chirurgischen und/oder medizinischen Instrumenten und Equipment

11. Nicht-therapeutische Verwendung einer Desinfektionsmittelzusammensetzung hergestellt nach dem Verfahren nach Anspruch 8 zur Desinfektion.

12. Nicht-therapeutische Verwendung nach Anspruch 11 einer Desinfektionsmittelzusammensetzung hergestellt nach dem Verfahren nach Anspruch 8 zur Desinfektion von chirurgischen und/oder medizinischen Instrumenten und Equipment.

## Revendications

1. Composition liquide de générateur de radicaux acétyle comprenant du N-acétylcaprolactame et un solvant organique, **caractérisée en ce que** le solvant organique est sélectionné parmi des éthers de propylène glycol et **en ce que** la teneur en solvant est de 20 % à 60 % en poids par rapport au poids total de la composition, et **caractérisée en ce que** la composition est dépourvue d'alcool aliphatique.

2. Composition selon la revendication 1, **caractérisée en ce que** le solvant organique est sélectionné parmi l'éther monométhylique de dipropylène glycol, l'éther mono-n-butylique de monopropylène glycol (butoxypropanol), l'éther mono-n-butylique de dipropylène glycol, l'éther monométhylique de tripropylène glycol et leurs mélanges.

3. Composition selon la revendication 2, **caractérisée en ce que** le solvant organique est l'éther monométhylique de tripropylène glycol.

4. Composition selon l'une quelconque des revendications précédentes, **caractérisée en ce que** la teneur en N-acétylcaprolactame est de 30 % à 80 % en poids par rapport au poids total de la composition.

5. Composition selon l'une quelconque des revendications précédentes, **caractérisée en ce qu'**elle comprend en outre un tensioactif non ionique.

6. Composition selon l'une quelconque des revendications précédentes, **caractérisée en ce qu'**elle est dépourvue de benzotriazole.

7. Kit de préparation d'une composition désinfectante contenant de l'acide peracétique, le kit contenant :
- dans un premier récipient, une composition liquide de générateur de radicaux acétyle selon l'une quelconque des revendications précédentes ; et
- dans un deuxième récipient, une composition liquide de générateur d'ions perhydroxyle comprenant du peroxyde d'hydrogène.

8. Procédé de préparation d'une composition désinfectante contenant de l'acide peracétique, dans lequel :
- une composition de générateur de radicaux acétyle est fournie selon l'une quelconque des revendications 1 à 6 ;
- une composition de générateur d'ions perhydroxyle est fournie, comprenant du peroxyde d'hydrogène ;
- la composition de générateur de radicaux acétyle et la composition de générateur d'ions perhydroxyle sont mélangées.

9. Utilisation non-thérapeutique d'un kit selon la revendication 7 pour la désinfection.

10. Utilisation non-thérapeutique selon la revendication 9 d'un kit selon la revendication 7 pour la désinfection d'instruments et d'équipement chirurgicaux et/ou médicaux.

11. Utilisation non-thérapeutique d'une composition désinfectante préparée selon le procédé de la revendication 8 pour la désinfection.

12. Utilisation non-thérapeutique selon la revendication 11 d'une composition désinfectante préparée selon le procédé de la revendication 8 pour la désinfection d'instruments et d'équipement chirurgicaux et/ou médicaux.
